# EUROPÄISCHE PATENTSCHRIFT

(11) **EP 1 149 445 B1**
(45) Veröffentlichungstag und Bekanntmachung des Hinweises auf die Patenterteilung: **11.03.2009**
(21) Anmeldenummer: 00904852.1
(22) Anmeldetag: 25.01.2000
(51) Int. Cl.: H02B 13/035

(54) **MEHRPHASIG GEKAPSELTE FREILUFT-HOCHSPANNUNGSSCHALTEINRICHTUNG**
MULTIPHASE ENCAPSULATED HIGH-VOLTAGE SWITCHGEAR FOR OUTDOOR USE
DISPOSITIF DISJONCTEUR HAUTE TENSION ENCAPSULE POUR COURANT POLYPHASE POUR MONTAGE A L'EXTERIEUR

(30) Priorität: 28.01.1999 DE 29902208 U; 02.02.1999 DE 29902246 U
(43) Veröffentlichungstag der Anmeldung: 31.10.2001
(73) Patentinhaber: SIEMENS AKTIENGESELLSCHAFT, 80333 München (DE)
(72) Erfinder: MEINHERZ, Manfred, D-13467 Berlin (DE); SUHR, Michael, D-16548 Glienicke (DE); SCHULZE-HEULING, Hugo, D-91093 Hessdorf (DE)
(86) Internationale Anmeldenummer: PCT/DE2000/000248
(87) Internationale Veröffentlichungsnummer: WO 2000/045486

(56) Entgegenhaltungen:
- US-A- 5 436 797

## Beschreibung

Die Erfindung liegt auf dem Gebiet der Verteilung von elektrischer Energie und ist bei der konzeptionellen Ausgestaltung einer mehrphasig gekapselten, gasisolierten Freiluft-Hochspannungsschalteinrichtung in liegender bzw. horizontaler Bauweise, bei der mehrere Leistungsschalter-Unterbrechereinheiten parallel zueinander in einem rohrförmigen Schaltergehäuse angeordnet sind, bei der diesen Unterbrechereinheiten beidendig winklig zur Längsachse des Schaltergehäuses abzweigende Leitungsanschlüsse zugeordnet sind und das Schaltergehäuse stirnseitig mit Verbindungsflanschen zum Anschluss von weiteren Kapselungsbausteinen versehen ist, wobei als weitere Kapselungsbausteine wenigstens zwei Bausteine zur Umlenkung der Stromanschlüsse der Unterbrechereinheiten in die abzweigenden Leitungsanschlüsse angeordnet sind.

Bei einer bekannten Hochspannungsschalteinrichtung sind die Unterbrechereinheiten in einem rohrförmigen Gehäuse angeordnet, das mittig geteilt sein kann und das im Bereich seiner Enden mit quer zur Gehäuseachse verlaufenden Rohrstutzen versehen ist; jeder Rohrstutzen nimmt eine Ableitung auf, die mit dem entsprechenden Pol einer Unterbrechereinheit verbunden ist. Weiterhin schließt sich an jeden Rohrstutzen ein Rohrteilstück an, in dem je ein Trennschalter und gegebenenfalls ein Erdungsschalter angeordnet sind. Um die Rohrstutzen herum ist jeweils ein Stromwandler angeordnet. Zwischen den Rohrstutzen und den anschließenden Rohrteilstücken kann weiterhin ein Spannungswandler vorgesehen sein. Schließlich soll am Ende jedes Rohrteilstückes als Freiluftdurchführung ein Kabelendverschluss angebracht sein. Diese Kabelendverschlüsse bilden einen wesentlichen Teil der Zu- und Ableitungen, wobei diese einen spitzen Winkel zwischen sich einschließen. - Bei dieser Hochspannungsschalteinrichtung ist das Schaltergehäuse an seiner einen Stirnseite mit einem Montagedeckel verschlossen, während am entgegengesetzten Ende der Antrieb für die bewegbaren Teile der Unterbrechereinheiten angeordnet ist. Die Antriebseinrichtung ist dabei auch an einem Gestell fixiert, auf dem auch das Schaltergehäuse ruht

(EP 0 744 758 A2).

Für einphasig gekapselte Freiluft-Hochspannungs-Schalteinrichtungen ist eine Anordnung bekannt, bei der einem liegend angeordneten, rohrförmigen Kapselungsgehäuse, welches eine Unterbrechereinheit eines Leistungsschalters enthält, beidendig jeweils eine auf einem gesonderten Fundament angeordnete Freiluftdurchführung zugeordnet ist und bei der zum Anschluß der jeweiligen Freiluftdurchführung stirnseitig an das Kapselungsgehäuse jeweils ein schräg zur Achse des Kapselungsgehäuse verlaufendes weiteres Kapselungsgehäuse angeordnet ist (DE-U 9417477.6). - Bei einer anderen bekannten, einphasig gekapselten Freiluft-Hochspannungs-Schaltanlage sind drei elektrisch und mechanisch miteinander verbundene Schalteinheiten in Reihe oder parallel zueinander angeordnet. Dabei sind dem Kapselungsgehäuse eines jedes liegend angeordneten Leistungsschalters sich beidendig stirnseitig anschließende, einen Stromwandler tragende Kapselungsbausteine zugeordnet, an die sich jeweils ein Trennschalter anschließt, der die Strombahn vertikal umlenkt. Die benachbarten Trennerbausteine zweier Schalteinheiten sind über einen zusätzlichen Baustein miteinander verbunden, und zwar entweder über einen eine Freiluftdurchführung tragenden Kapselungsbaustein oder über eine Leitungsverbindung, die an eine Freiluftdurchführung angeschlossen ist. An die beiden Enden der drei hintereinander geschalteten Schalteinheiten ist jeweils direkt auf den Trennerbaustein eine Freiluftdurchführung aufgesetzt (DE 2929054 A1).

Eine mehrphasig gekapselte gasisolierte Freiluft-Hochspannungsschalteinrichtung in liegender Bauweise eingangs genannter Art ist beispielsweise aus der US-Patentschrift US 5,436,797 bekannt. Dort ist eine Freiluft-Hochspannungsschalteinrichtung in modularer Bauweise beschrieben. Zur Reduzierung der Baugröße sowie zur Verkürzung von Sammelschienenabschnitten ist dort vorgeschlagen, Leistungsschalter und Sektionsschalter parallel zu den Sammelschienenabschnitten auszurichten.

Ausgehend von einer mehrphasig gekapselten, gasisolierten Freiluft-Hochspannungsschalteinrichtung mit den Merkmalen des Oberbegriffes des Patentanspruches 1 liegt der Erfindung die Aufgabe zugrunde, Schaltkräfte in einer zuverlässigen Weise in ein Schaltergehäuse einzuleiten und dabei die Abmessungen der Anlage gering zu halten.

Zur Lösung dieser Aufgabe ist gemäß der Erfindung vorgesehen, dass das Schaltergehäuse auf einem Traggestell angeordnet und dem Schaltergehäuse eine Antriebseinrichtung zum Antrieb der bewegbaren Teile der Unterbrechereinheiten zugeordnet ist und dass die Antriebseinrichtung zum Zwecke der Einleitung der Antriebskräfte in das Schaltergehäuse über ein im Mantelbereich des Schaltergehäuses angeordnetes Drehlager seitlich zum Schaltergehäuse angeordnet ist.

Diese Ausgestaltung der Schalteinrichtung sieht also im wesentlichen vor, die rohrförmige Gestalt des Schaltergehäuses möglichst wenig zu verändern und die übrigen zur Schalteinrichtung gehörenden Komponenten einzelnen Kapselungsbausteinen zuzuordnen, die sich stirnseitig in horizontaler Richtung an das Schaltergehäuse anschließen. Hierzu kann es zweckmäßig sein, das Schaltergehäuse asymmetrisch quer zu teilen, wobei die Außendurchmesser der Anschlußflansche des Schaltergehäuses kleiner als der Außendurchmesser des Schaltergehäuses sind. Dies eröffnet beispielsweise die Möglichkeit, das axial kürzere Teil des Schaltergehäuses zusätzlich als Stromwandlerbaustein auszubilden, wie es prinzipiell aus Figur 1 der DE 298 06 652 mit dem Teil 1 bekannt ist. Zusätzlich kann am anderen Ende des Schaltergehäuses in dieses ein weiterer Stromwandler integriert sein. - Das Schaltergehäuse kann aber auch derart quergeteilt sein, dass zwei axial kürzere Teile beidendig einem axial längeren Teil zugeordnet sind, wobei der Außendurchmesser der Verbindungsflansche zum Anschluss weiterer Kapselungsbausteine kleiner als der Außendurchmesser des Schaltergehäuses ist,
und dass wenigstens eines der axial kürzeren Teile des Schaltergehäuses als Stromwandlerbaustein ausgebildet ist.

Wesentlich für die Erfindung ist, dass als weitere Kapselungsbausteine generell zwei Bausteine vorhanden sind, die zur Umlenkung der Stromanschlüsse der Leistungsschalterpole in die winklig abzweigenden Leitungsanschlüsse dienen. Diese Umlenkbausteine können dabei in an sich bekannter Weise kombinierte Trenner-Erder-Schalter enthalten (DE 196 32 574 Al, DE 198 25 386 C1). An die Umlenkbausteine können weiterhin ein Kabelanschlussbaustein oder ein rohrförmiger Kapselungsbaustein einer horizontal verlaufenden dreiphasigen Sammelschiene angeschlossen sein; wenigstens einer der beiden Umlenkbausteine kann auch als Aufteilungsbaustein mit nach oben gespreizt abzweigenden Anschlüssen für Freiluftdurchführungen ausgebildet sein. Dabei kann auf den zweiten Umlenkbaustein ein Aufteilungsbaustein mit nach oben gespreizt abzweigenden Anschlüssen für Freiluftdurchführungen aufgesetzt sein. Dies ist insbesondere dann sinnvoll, wenn an den Umlenkbausteinen noch ein Schnellerder-Baustein angeschlossen werden soll. - Die Zuordnung der unterschiedlich ausgestalteten oder unterschiedlich bestückten Umlenkbausteine zu den beiden Enden des rohrförmigen Schaltergehäuses kann beliebig getroffen werden. Eine für die praktischen Bedürfnisse besonders zweckmäßige Anordnung besteht darin, an den beiden Enden des Schaltergehäuses jeweils einen als Trenner-Erder-Baustein ausgebildeten, vertikal ausgerichteten Umlenkbaustein anzuordnen und auf jeden Umlenkbaustein einen Aufteilungsbaustein mit nach oben gespreizt abzweigenden Anschlüssen für Freiluftdurchführungen aufzusetzen, wobei die Freiluftanschlüsse des jeweiligen Aufteilungsbausteines in einer gemeinsamen, gegen die vertikale geneigten Ebene liegen. Eine solche Schaltanlage kann raumsparend Schaltanlagen ersetzen, die bisher in überdachten Räumen aus Komponenten bisher üblicher, nicht gekapselter Freiluftschaltanlagen aufgebaut sind. - Die neue Schaltanlage kann auch in einfacher Weise dazu genutzt werden, um eine in zwei übereinander angeordneten Ebenen verlaufende Einfachsammelschiene mit einer Leistungsschalter-Längskupplung zu versehen. Hierbei ist dann an den einen Umlenkbaustein der Schalteinrichtung ein rohrförmiger Kapselungsbaustein eines horizontal verlaufenden Abschnittes der dreiphasigen Sammelschiene angeschlossen und an den anderen, vertikal ausgerichteten Umlenkbaustein ist nach oben anschließend ein weiterer gleichartiger Umlenkbaustein angeschlossen, der dann zur Ankopplung des zweiten, räumlich parallel zum ersten Sammelschienenabschnitt verlaufenden zweiten Sammelschienenabschnittes dient, zweckmäßig über ein parallel zu der Schalteinrichtung verlaufendes Kapselungsrohr und einen anschließenden Umlenkbaustein.

Wenn die Umlenkbausteine als Aufteilungsbausteine mit nach oben gespreizt abzweigenden Anschlüssen für Freiluftdurchführungen ausgebildet sind, so können die Aufteilungsbausteine so ausgestaltet sein, daß die Freiluftdurchführungen in einer gemeinsamen vertikalen Ebene liegen. Hierbei empfiehlt es sich, den Aufteilungsbaustein in Anlehnung an die aus der DE 298 06 652 bekannte Anordnung so auszugestalten, daß jeder winklige Aufteilungsbaustein als kurzer Hohlzylinder ausgebildet ist, von dem ein sich trichterförmig erweiternder Gehäusebereich radial abzweigt und in drei Anschlußflansche übergeht, wobei die Anschlußebenen dieser Anschlußflansche tangential an einem konzentrisch zur Achse des Aufteilungsbausteines verlaufenden Teilkreis anliegen. - Die Anschlußflansche können aber auch so angeordnet werden, daß die Freiluftdurchführungen nicht in einer gemeinsamen Ebene liegen, sondern derart in unterschiedliche Richtungen abgespreizt sind, daß die freien Enden der Freiluftdurchführungen auf gleicher Höhe liegen.

Die Anordnung weiterer Kapselungsbausteine zusätzlich zu den Umlenk-Bausteinen kommt außer zur Integration von Trenn- und Erdungsschaltern bzw. von kombinierten Trenn-Erdungsschaltern auch zur Integration von Spannungswandlerbausteinen in Betracht. Ein Trennerbaustein bzw. ein Trenner-Erder-Baustein kann ein oder beidseitig zum Schaltergehäuse zwischen einem Verbindungsflansch des Schaltergehäuses und einem winkligen Umlenk-Baustein angeordnet sein. Ein Spannungswandlerbaustein wird dann zweckmäßig radial an den Trenner-Baustein bzw. den Trenner-Erder-Baustein angeschlossen. In die letztgenannten Bausteine sind zweckmäßig auch dreiphasige Isolierstoffdurchführungen integriert, die auch in geschotteter Bauweise ausgeführt sein können.

Die Anordnung von weiteren Kapselungsbausteinen an den Stirnseiten des Schaltergehäuses eröffnet die Möglichkeit, den Schalterantrieb raumsparend seitlich, vorzugsweise unterhalb des Schaltergehäuses anzuordnen. Hierbei erfolgt die Ankopplung des Schalterantriebes an die bewegbaren Teile der Unterbrechereinheiten über ein im Mantelbereich des Schaltergehäuses angeordnetes Drehlager, wie es beispielsweise bei Freiluftleistungsschaltern gebräuchlich ist. Zweckmäßig ist hierzu die Antriebseinrichtung an einem Montageflansch im Mantelbereich des Schaltergehäuses befestigt und über getrennte Hebelgetriebe für die einzelnen Unterbrechereinheiten an deren bewegbare Kontaktstücke angekoppelt; hierbei ist dann das Drehlager in einem an den Montageflansch angeschlossenen Getriebegehäuse angeordnet, während jedes Hebelgetriebe einen zweiarmigen Umlenkhebel aufweist, dessen Drehlager am Mantel des Schaltergehäuses isoliert abgestützt ist. - Das Schaltergehäuse kann in seinem Mantelbereich mit einer zusätzlichen Montageöffnung versehen sein.

Die Variabilität der neuen Freiluft-Hochspannungsschalteinrichtung läßt sich noch weiter verbessern, wenn zwischen einem Verbindungsflansch des Schaltergehäuses und einem der beiden winkligen Umlenk-Bausteine, die vorzugsweise als Aufteilungsbausteine mit nach oben gespreizt abzweigenden Anschlüssen für Freiluftdurchführungen ausgebildet sind, weitere Kapselungsbausteine angeordnet sind, von denen wenigstens einer zur Umlenkung der Strombahn in einer horizontalen Ebene um 90 ° dient. Dies eröffnet die Möglichkeit, die Schalteinrichtung derart zu erweitern, daß zwei oder mehr Freiluft-Hochspannungsschalteinrichtungen in einer sogenannten H-Schaltung angeordnet werden können. Bei den weiteren Kapselungsbausteinen handelt es sich daher im wesentlichen um Trenner-Erder-Bausteine und um zusätzliche Leistungsschalter-Bausteine. Insbesondere ist es zweckmäßig, als weitere Kapselungsbausteine drei übereck im rechten Winkel zueinander angeordnete Trenner-Erder-Bausteine vorzusehen, von denen der mittlere über einen zusätzlichen Leistungsschalter-Baustein mit einer zweiten, gleichartig aufgebauten und spiegelbildlich angeordneten Freiluft-Hochspannungsschalteinrichtung verbunden ist. Als Baustein zur Umlenkung der Strombahn in einer horizontalen Ebene um 90 ° dient dabei zweckmäßig ein sogenannter Kreuzbaustein, wie er bei gekapselten, gasisolierten Hochspannungsschaltanlagen gebräuchlich ist und der einen dreiphasigen, kombinierten Trenn-Erdungsschalter enthält, wie er beispielsweise aus der deutschen Gebrauchsmusterschrift 298 06 211.9 bekannt ist. Speziell an diesen Kreuzbaustein kann zusätzlich ein Spannungswandler-Baustein angeflanscht sein.

In Abwandlung der Erfindung besteht im übrigen die Möglichkeit, den Baustein zur Umlenkung der Strombahn in eine horizontale Ebene um 90 ° nicht zwischen dem Schaltergehäuse und einem der beiden winkligen Aufteilungsbausteine anzuordnen, sondern axial an den winkligen Aufteilungsbaustein anzuflanschen.

Die gemäß der Erfindung vorgesehene Ausgestaltung der Freiluft-Hochspannungsschalteinrichtung ermöglicht es auch, eine entsprechend ausgestaltete Schalteinrichtung entweder als Längskupplung zur Ankopplung von Transformatoren im Zuge einer Freileitung oder einer gasisolierten Sammelschiene oder als Querkupplung zur Einspeisung eines doppelten Freileitungssystems in eine Transformatorenstation zu verwenden.

Ausführungsbeispiele der neuen Freiluft-HochspannungsSchalteinrichtung sind in den Figuren 1 bis 17 dargestellt. Dabei zeigen
die Figuren 1 und 2 ein erstes Ausführungsbeispiel mit zwei als Aufteilungsbausteine ausgebildeten Umlenk-Bausteinen in einer Seiten- und einer Stirnansicht,
Figuren 3 und 4 eine Variante zu Figur 1 für das Schaltergehäuse mit angeflanschter Antriebseinrichtung, mit Darstellung des Antriebsweges,
Figur 5 eine Variante zu Figur 1 mit einem Schaltergehäuse gem. Figur 3,
Figur 6 eine zweite Variante zu Figur 1, hier mit an die Umlenk-Bausteine angeflanschten Kabelanschluß-Bausteinen,
Figur 7 eine dritte Variante zu Figur 1, hier mit einem Umlenk-Baustein zum Anschluß eines horizontal verlaufenden Abschnittes einer gekapselten Sammelschiene,
Figur 8 eine vierte Variante zu Figur 1, bei der die Schalteinrichtung als Längskupplung im Zuge einer gekapselten Einfach-Sammelschiene ausgebildet ist,
Figur 9 eine fünfte Variante zu Figur 1, hier mit einem auf einen Umlenk-Baustein aufgesetzten Aufteilungsbaustein und
Figur 10 eine sechste Variante zu Figur 1, hier mit zwei auf Umlenk-Bausteine aufgesetzten Aufteilungsbausteinen, deren Freiluftdurchführungen gegenüber der Vertikalen geneigt angeordnet sind.
Figur 11 zeigt eine Schaltanlage mit mehreren Leistungsschaltern und mit den Leistungsschaltern zugeordneten Umlenk-Bausteinen zur Umlenkung der Strombahn um 90 ° in einer horizontalen Ebene, zur Realisierung einer sog. H-Schaltung,
Figuren 12 bis 15 verschiedene Abwandlungen der Schaltanlage gem. Figur 11,
Figur 16 eine H-Schaltung mit zwei Kabelabgängen und
Figuren 17 und 18 eine als Doppelabzweig ausgebildete H-Schaltung.

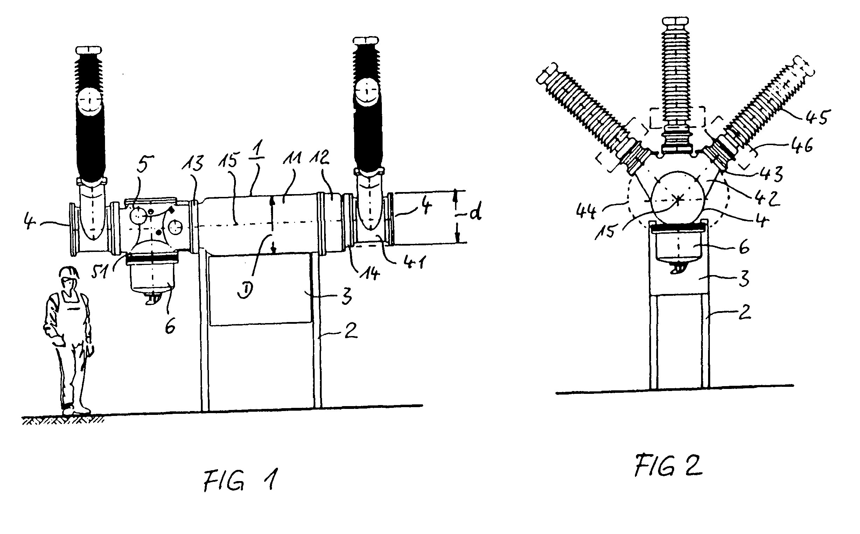

Die Figuren 1 und 2 zeigen eine Freiluft-Hochspannungsschalteinrichtung, bei der ein Schaltergehäuse 1 horizontal liegend auf einem Gestell 2 angeordnet ist. Das Schaltergehäuse 1 ist asymmetrisch quergeteilt, so daß ein längeres Gehäuseteil 11 und ein kürzeres Gehäuseteil 12 vorhanden sind. Beide Gehäuseteile sind mit jeweils einem Anschlußflansch 13 bzw. 14 versehen, wobei der Außendurchmesser des jeweiligen Anschlußflansches kleiner als der Außendurchmesser des Schaltergehäuses 1 ist. In dem Schaltergehäuse sind in nicht dargestellter Weise drei Unterbrechereinheiten angeordnet, vorzugsweise im Dreieck. Das Schaltergehäuse kann gegebenenfalls oval ausgebildet sein. - Das Gehäuseteil 12 kann zugleich als Kapselungsbaustein zur Aufnahme eines Stromwandlers dienen, wie es an sich aus der DE 298 05 945 U bekannt ist.

An das Schaltergehäuse 1 bzw. dessen Gehäuseteil 12 ist ein Kapselungsbaustein 4 angeflanscht, bei dem es sich um einen winkligen Aufteilungsbaustein zur Umlenkung der Stromanschlüsse der Leistungsschalterpole in die aufgespreizt abzweigenden Freiluftdurchführungen 45 handelt. Hierzu geht der als kurzer Hohlzylinder 41 ausgebildete Kapselungsbaustein in einen sich radial trichterförmig erweiternden Gehäusebereich 42 über, der in drei Anschlußflanschen 43 endet. Die Anschlußebenen dieser Anschlußflansche liegen tangential an einem Teilkreis 44 an, wobei dieser Teilkreis konzentrisch zur Achse des Aufteilungsbausteines und damit zur Achse 15 des Schaltergehäuses 1 angeordnet ist. In der dargestellten Ausführungsform liegen die Freiluftdurchführungen 45 gemeinsam in einer vertikalen Ebene.

Ein zweiter winkliger Aufteilungsbaustein 4 ist am anderen Ende der Hochspannungsschalteinrichtung angeordnet. Zwischen diesem zweiten Aufteilungsbaustein 4 und dem Anschlußflansch 13 des Gehäuseteiles 11 befindet sich ein Kapselungsbaustein 5, der in bekannter Weise einen nicht näher dargestellten kombinierten Trenn- Erdungsschalter aufnimmt. Ein derartiger Schalter ist prinzipiell bekannt ( DE 36 08 482 C2, EP 0 128 377 A2) sowie auch in einer älteren Patentanmeldung (DE 198 16 360.6) beschrieben. Der Kapselungsbaustein 5 weist weiterhin einen radial angeordneten Anschlußflansch 51 auf, an den ein Spannungswandler 6 angeflanscht ist. - Ein gleichartiger Kapselungsbaustein 5 kann auch zwischen dem Gehäuseteil 12 und dem zugehörigen winkligen Aufteilungsbaustein 4 angeordnet sein. - Im einfachsten Fall besteht die Hochspannungsschalteinrichtung im wesentlichen nur aus dem die Leistungsschalter-Unterbrechereinheiten aufnehmenden Schaltergehäuse 1 und zwei seitlich angeflanschten Aufteilungsbausteinen 4.

Unterhalb des Schaltergehäuses 1 ist noch ein Schrank 3 angeordnet, der am Gestell 2 befestigt ist und der neben der Schalter- und Anlagensteuerung eine nicht näher dargestellte Antriebseinrichtung zum Antrieb der bewegbaren Teile der im Schaltergehäuse 1 angeordneten Unterbrechereinheiten aufnimmt. Hierzu sind Teile eines Hebelantriebes durch den Mantel des Schaltergehäuses 1 bzw. durch einen im Mantelbereich angeordneten Flansch an die bewegbaren Teile der Unterbrechereinheiten angelenkt.

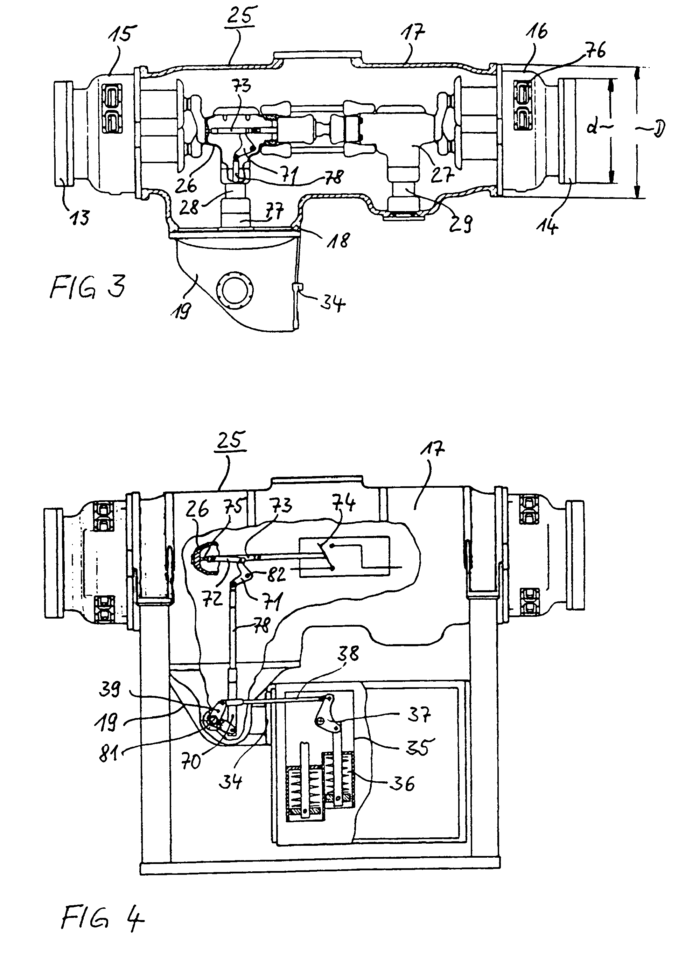

Figur 3 zeigt einen Leistungsschalterbaustein 25, dessen Schaltergehäuse derart quergeteilt ist, daß zwei axial kürzere Gehäuseteile 15 und 16 einem axial längeren Teil 17 zugeordnet sind. Die Gehäuseteile 15 und 16 sind gleichartig ausgebildet und dienen unter anderem als Stromwandlerbausteine, wobei jeweils der Sekundäranschlussbereich 76 erkennbar ist. Die Gehäuseteile 15 und 16 dienen zugleich als Übergangsstücke vom rohrförmig gestalteten Gehäuseteil 17 auf anschließende Kapselungsbausteine, wobei der dem Gehäuseteil 17 zugekehrte Verbindungsflansch einen größeren Außendurchmesser als der einem anschließenden Kapselungsbaustein zugeordnete Verbindungsflansch aufweist.

Innerhalb des Gehäuseteils 17 sind die Polstücke 26 und 27 eines der drei Leistungsschalterpole umrissartig angegeben, wobei sich jeder Leistungsschalterpol über einen hohlen Isolierstützer 28 bzw. 29 an der rohrförmigen Gehäusewand des Gehäuseteiles 17 abstützt. Dem Polstück 26 ist hierzu im Bereich eines Gehäuseflansches 18 eine Traverse 77 zugeordnet. An den Gehäuseflansch 18 ist ein Gehäuse 19 angeflanscht, welches ein Umlenkgetriebe aufnimmt und gemäß Figur 4 zugleich mit einem Tragflansch 34 für eine Antriebseinrichtung 35 versehen ist. Die Antriebseinrichtung 35 enthält einen Federspeicherantrieb 36, der über einen Umlenkhebel 37 und eine Koppelstange 38 auf einen Umlenkhebel 39 einwirkt. Das Drehlager dieses Umlenkhebels ist derart in dem Gehäuse 19 gelagert, dass dessen einer Hebelarm sich innerhalb des Gehäuses 19 befindet. An diesen Hebelarm ist eine vertikal bewegbare Koppelstange 70 angelenkt. Diese Koppelstange wirkt an jedem der in dem Schaltergehäuse 17 vorgesehenen, einen bewegbaren Schaltkontakt aufweisenden Leistungsschalterpole über jeweils ein Koppelelement 78 auf einen Umlenkhebel 71 ein, der mit seinem Drehlager 82 im Gehäuse des Polstückes 26 gelagert ist und der seinerseits über eine schwenkbare erste Koppelstange 72 und eine zweite, axial geführte Koppelstange 73 das axial bewegbare Kontaktstück 74 des Polstückes 26 antreibt. Die zweite Koppelstange 73 sitzt hierzu gleitend auf einer horizontal verlaufenden Führungsstange 75 auf und nimmt auch das Schwenklager für die erste Koppelstange 72 auf.

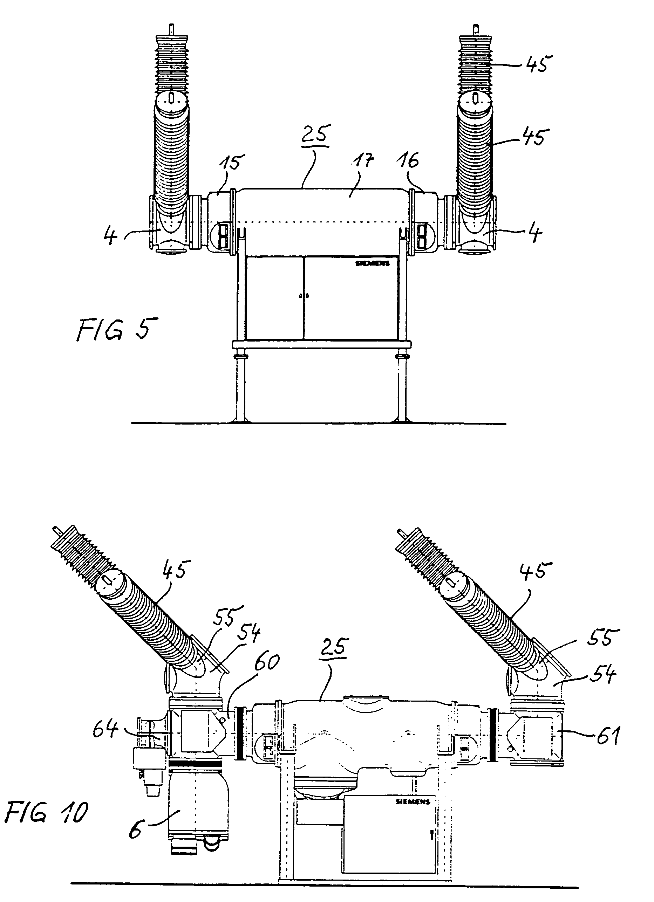

Figur 5 zeigt die Ansicht einer Schaltanlage, die lediglich einen Leistungsschalterbaustein 25 mit den Gehäuseteilen 15, 16 und 17 sowie an jeweils einem Ende dieses Leistungsschalterbausteines einen Kapselungsbaustein in Form eines Aufteilungsbausteines 4 mit nach oben gespreitzt abzweigenden Anschlüssen für Freiluftdurchführungen 45 aufweist.

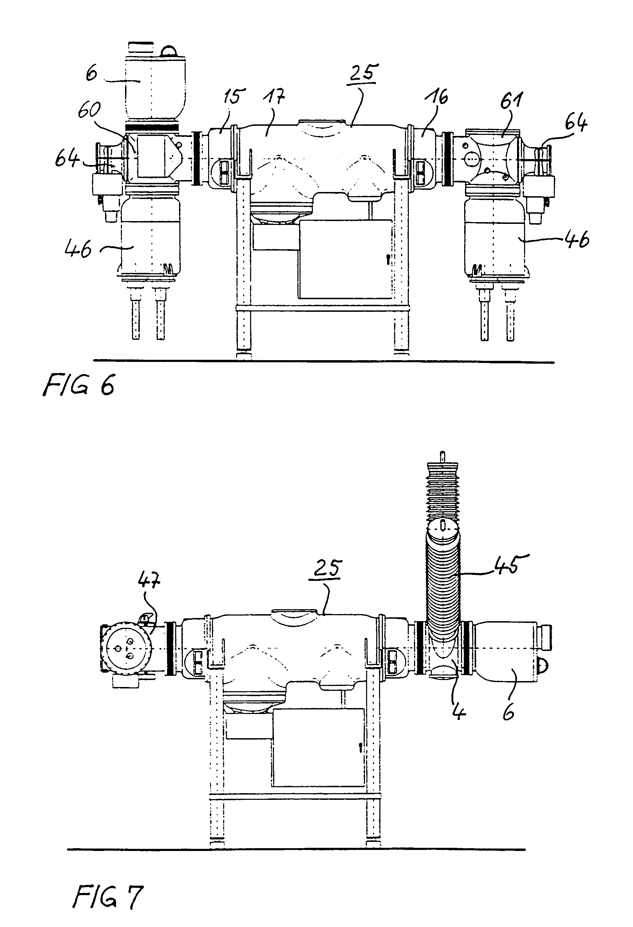

Gemäß Figur 6 ist einem Leistungsschalterbaustein 25 mit den Gehäuseteilen 15, 16 und 17 beidendig ein Umlenkbaustein 60 bzw. 61 zugeordnet, der die Strombahnen um 90° nach unten umlenkt und zugleich als kombinierter Trenner/Erder ausgebildet und zusätzlich mit einem Schnellerder 64 versehen ist. An diese Umlenkbausteine ist jeweils ein Kabelanschluss-Baustein 46 angeflanscht. Dem Umlenkbaustein 60 ist weiterhin ein Spannungswandler 6 zugeordnet.

Figur 7 zeigt einen Leistungsschalterbaustein 25, an den an dem einen Ende ein Umlenkbaustein angeschlossen ist, der als Aufteilungsbaustein 4 ausgebildet ist und Freiluftdurchführungen 45 trägt. Axial ist an diesen Umlenkbaustein ein Spannungswandler 6 angeschlossen. - Am anderen Ende des Leistungsschalterbausteines ist ein Umlenkbaustein 47 angeordnet, der die Strombahnen in der horizontalen Ebene um 90° umlenkt und zum Anschluß einer dreiphasig gekapselten Sammelschiene vorgesehen ist.

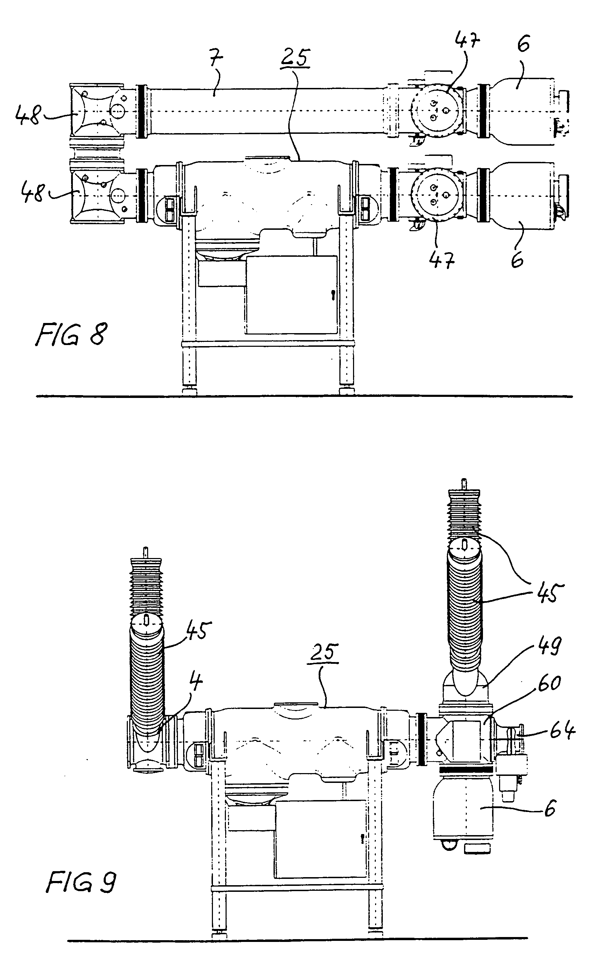

Gemäß Figur 8 ist einem Leistungsschalterbaustein 25 am rechten Ende ein Umlenkbaustein 47 zum Anschluß einer dreiphasig gekapselten Sammelschiene zugeordnet; zugleich ist an diesen Umlenkbaustein ein Spannungswandler 6 angeflanscht. Am linken Ende des Leistungsschalterbausteines ist ein Umlenkbaustein 48 angeordnet, der die Strombahn vertikal um 90° nach oben umlenkt. Darauf ist ein gleichartiger Baustein 48 aufgesetzt, an den sich horizontal ein Verlängerungsbaustein 7 in Form einer dreiphasig gekapselten Sammelschiene anschließt. An diesen Verlängerungsbaustein ist ein Umlenkbaustein 47 angeordnet, der die Strombahn in horizontaler Richtung um 90° umlenkt und zum Anschluß einer Sammelschiene dient. Auch dieser zweite Umlenkbaustein 47 trägt einen Spannungswandler 6. - In dieser Ausgestaltung der Erfindung dient die Schaltanlage als Längskupplung im Zuge einer gekapselten Einfachsammelschiene.

Gemäß Figur 9 dient der am rechten Ende eines Leistungsschalterbausteines angeordnete Umlenkbaustein 60 zur Umlenkung der Strombahn um 90° nach oben und ist zugleich als kombinierter Trenner/Erder ausgebildet. An diesen Umlenkbaustein 60 ist weiterhin nach unten ein Spannungswandler 6 und axial nach rechts ein Schnellerder 64 angeflanscht. An dem nach oben ragenden Flansch trägt der Umlenkbaustein einen Aufteilungsbaustein 49, der mit drei Anschlußflanschen versehen ist, auf die Freiluftdurchführungen 45 aufgesetzt sind. Dabei liegen die Freiluftdurchführungen in einer gemeinsamen vertikalen Ebene.

Gemäß Figur 10 ist an einen Leistungsschalterbaustein 25 an jedem Ende ein Umlenkbaustein 60 bzw. 61 zur Umlenkung der Strombahn um 90° nach oben angesetzt, wobei diese Umlenkbausteine zugleich als Trenner/Erder ausgebildet sind. Auf beide Umlenkbausteine ist ein Aufteilungsbaustein 54 aufgesetzt, wobei die Anschlüsse 55 für Freiluftdurchführungen 45 jeweils in einer gemeinsamen, gegen die Vertikale geneigten Ebene liegen. - An den Umlenkbaustein 60 ist noch ein Spannungswandler 6 sowie ein Schnellerder 64 angeflanscht.

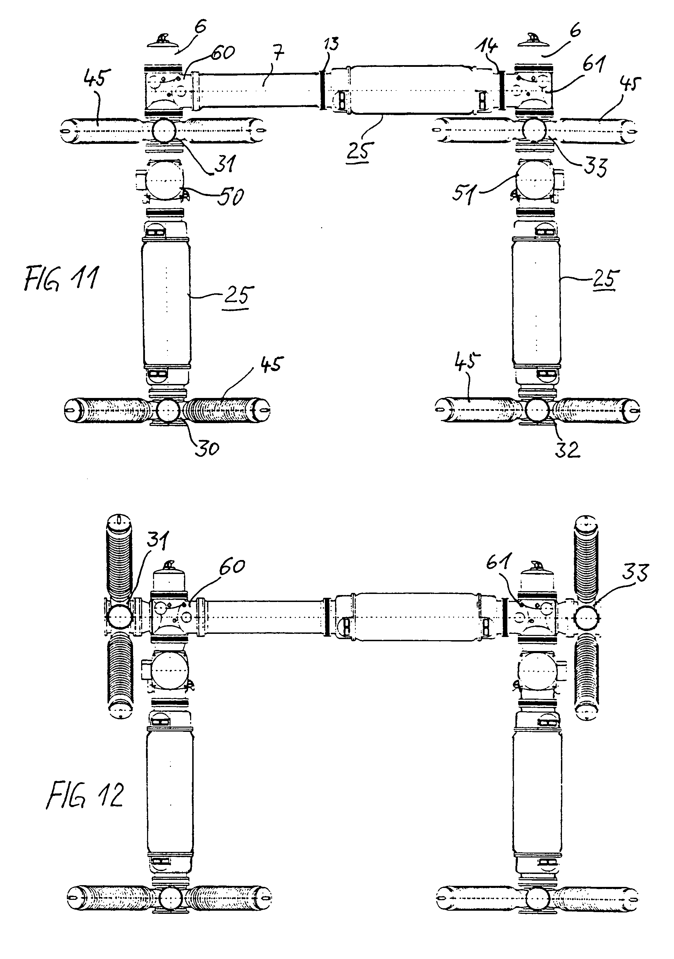

Figur 11 zeigt eine Freiluft-Hochspannungsschalteinrichtung, bei der zwei Schalteinrichtungen gemäß Figur 1 parallel zueinander angeordnet sind, wobei jede Schalteinrichtung im wesentlichen aus einem Leistungsschalter-Baustein 25, einem Trenn-Erder-Baustein 50 bzw. 51 sowie zwei winkligen Aufteilungsbausteinen 30 und 31 bzw. 32 und 33 besteht. An die beiden Bausteine 31 und 33 ist jeweils ein Kapselungsbaustein 60 bzw. 61 angeschlossen, der zur Umlenkung der Strombahn in einer horizontalen Ebene um 90 ° dient. Hierzu sind die Bausteine 60 und 61 als kombinierte Trenn-Erder-Bausteine ausgebildet, wie sie an sich aus dem Stand der Technik bekannt sind. An jeden Baustein 60 bzw. 61 ist ein Spannungswandler 6 angesetzt. - Die beiden Bausteine 60 und 61 sind über einen dritten Leistungsschalter-Baustein 25 miteinander gekoppelt, der einerseits direkt an den Baustein 61 und andererseits über einen Verlängerungsbaustein 7 an den Baustein 60 angeschlossen ist.

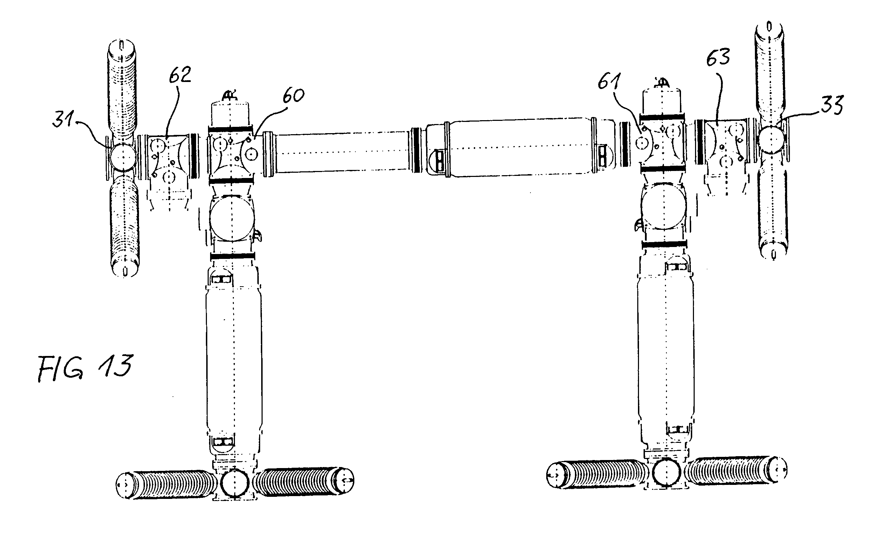

Gemäß Figur 12 kann die Schaltanlage nach Figur 11 bei gleicher Funktion auch so aufgebaut werden, daß die Aufteilungsbausteine 31 und 33 an die Umlenkbausteine 60 bzw. 61 angeflanscht sind. - Gemäß Figur 13 können dabei zusätzliche Trenn-Erder-Bausteine 62 bzw. 63 angeordnet werden.

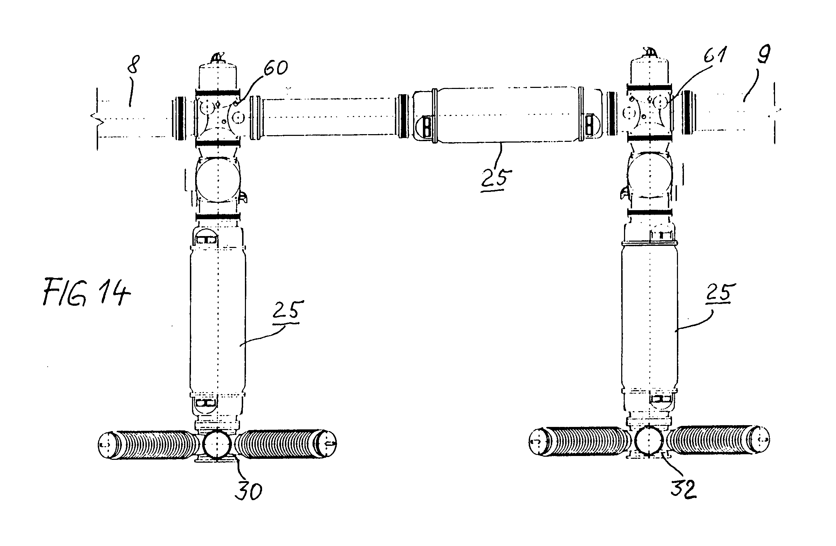

Gemäß Figur 14 sind zwischen den beiden winkligen Aufteilungsbausteinen 30 und 32 drei Leistungsschalter-Bausteine 25 angeordnet, wobei deren Zuordnung mit Hilfe der Umlenkbausteine 60 bzw. 61 erfolgt. An die Umlenkbausteine 60 und 61 sind in diesem Fall keine Aufteilungsbausteine sondern dreiphasige Rohrleitungsabschnitte 8 bzw. 9 angeflanscht, die zu entsprechenden Energieanschlüssen führen.

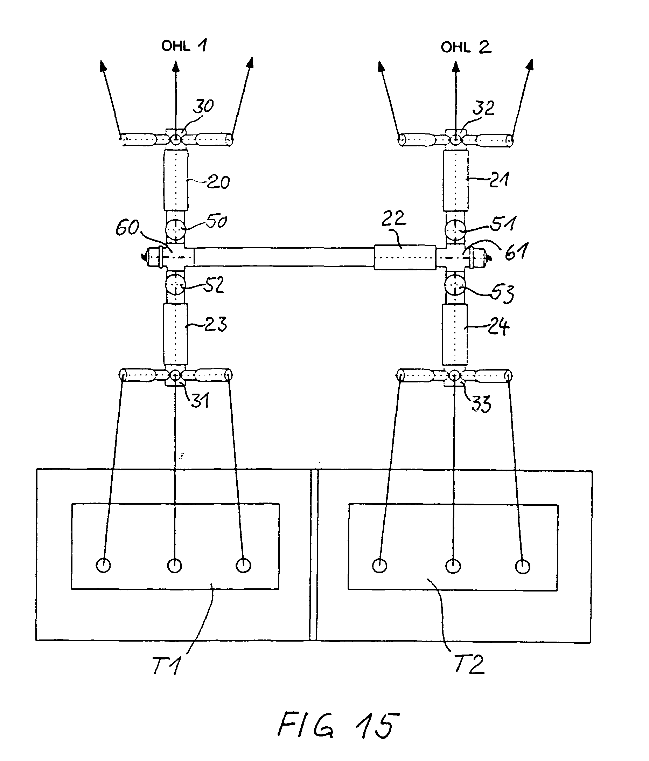

Figur 15 zeigt eine vollständige sogenannte H-Schaltung, bei der zwei getrennte Freileitungssysteme OHL 1 und OHL 2 über eine erste Freiluft-Hochspannungsschalteinrichtung mit den Leistungsschaltern 20 und 23, den Aufteilungsbausteinen 30 und 31, den Trenner-Erderbausteinen 50 und 52 sowie dem Umlenkungsbaustein 60 sowie eine zweite Freiluft-Hochspannungsschalteinrichtung mit den korrespondierenden Bausteinen 21, 24, 32, 33, 51, 53 und 61 über die Querverbindung 7 und den Leistungsschalter-Baustein 22 miteinander gekuppelt und zwei Transformatoren T₁ und T₂ zugeordnet sind.

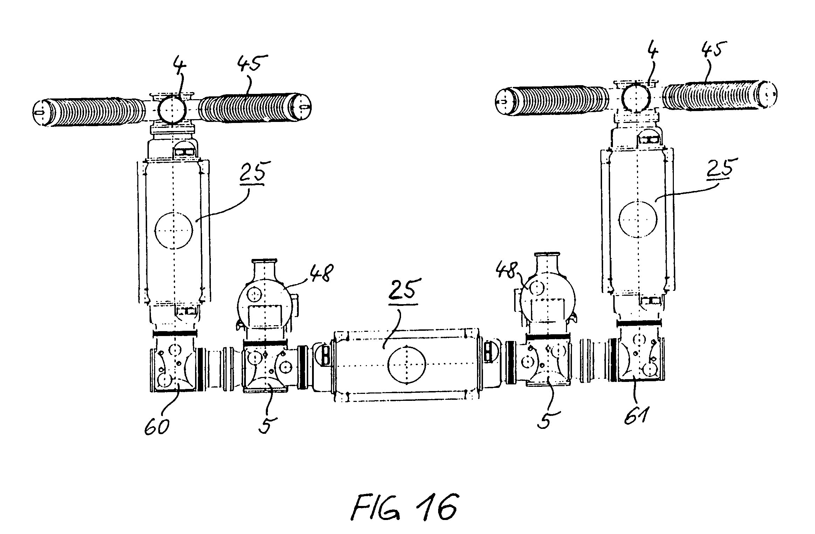

Die Freiluft-Hochspannungsschalteinrichtung gemäß Figur 16 weist drei Leistungsschalterbausteine 25 auf, die U-förmig angeordnet sind und untereinander über kombinierte Trenner-Erder-Bausteine 5 sowie zwei Kapselungsbausteine 60 und 61 miteinander verbunden sind, wobei die Umlenkbausteine 60/61 die Strombahn in horizontaler Richtung um 90° umlenken und als Trenner-Erder-Bausteine ausgebildet sind. An die an den mittleren Leistungsschalterbaustein 25 unmittelbar angrenzenden Bausteine 5 ist jeweils ein Umlenkbaustein 48 angeflanscht, der zur Umlenkung der horizontal verlaufenden Strombahn um 90° nach unten dient und an den nicht näher dargestellte Kabelanschluss-Bausteine angeflanscht sind.

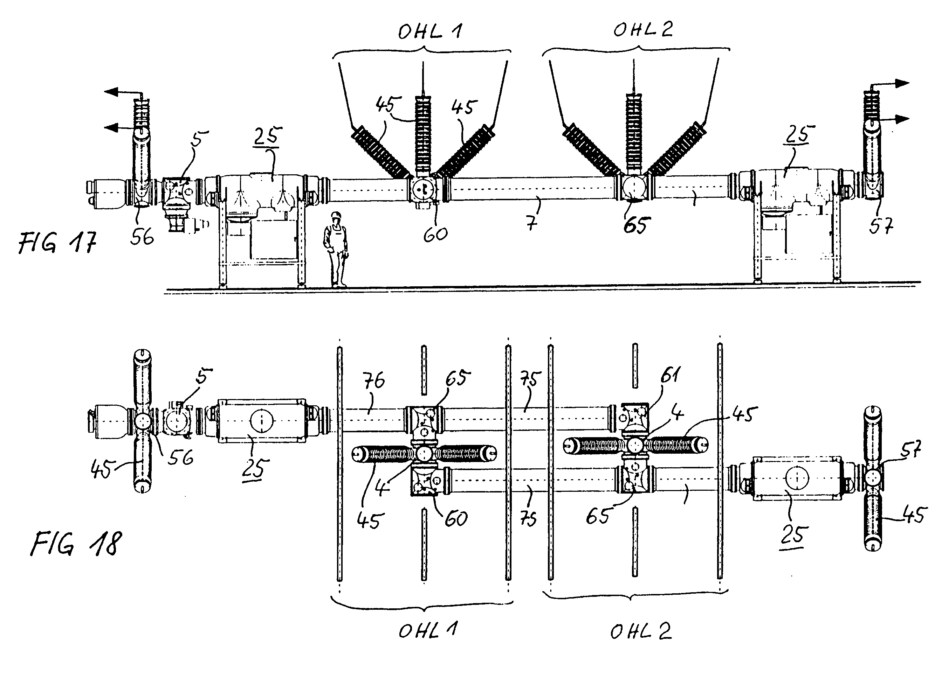

Figur 17 zeigt in Ansicht und Figur 18 in Draufsicht zwei Freileitungssysteme OHL 1 und OHL 2, an die eine Hochspannungsschalteinrichtung in Form eines Doppelabzweiges angeschlossen ist. Hierzu ist an jedes Freileitungssystem zunächst über Freileitungsdurchführungen 45 ein Aufteilungsbaustein 4 angeschlossen, der zur Umlenkung der Strombahn in eine horizontale Ebene dient, und an den sich ein Umlenkbaustein 60 bzw. 61 zur Umlenkung der Strombahn in einer horizontalen Ebene um 90° anschließt. Dieser Umlenkbaustein ist zugleich als integrierter Trenner-Erder-Baustein ausgebildet. Von den Bausteinen 60 bzw. 61 geht es über gekapselte Rohrleitungsabschnitte 75 zu einem T-förmig gestalteten Kapselungsbaustein 65, der mit einem integrierten Winkeltrenner-Erder versehen ist und der zugleich an den jeweils anderen Umlenkbaustein 4 angeschlossen ist. Von den Kapselungsbausteinen 65 geht es über ein gekapselten Rohrleitungsabschnitt 76 zum jeweiligen Leistungsschalterbaustein 25, an den direkt bzw. unter Zwischenschaltung eines Längstrenner-Erders 5 ein Aufteilungsbaustein 56 bzw. 57 angeschlossen ist, der mit nach oben gespreitzt abzweigenden Anschlüssen für Freiluftdurchführungen 45 versehen ist. An die Freiluftdurchführungen kann ein Transformator oder ein weiteres Freileitungssystem angeschlossen sein. Alternativ kommt auch der Anschluß eines Kabelsystems unter Verwendung eines entsprechenden Umlenkbausteines in Betracht.

## Patentansprüche

1. Mehrphasig gekapselte, gasisolierte Freiluft-Hochspannungsschalteinrichtung in liegender bzw. horizontaler Bauweise,
bei der mehrere Leistungsschalter-Unterbrechereinheiten (26,27) parallel zueinander in einem rohrförmigen Schaltergehäuse (1,3,17) angeordnet sind,
bei der diesen Unterbrechereinheiten (26,27) beidendig winklig zur Längsachse des Schaltergehäuses abzweigende Leitungsanschlüsse zugeordnet sind und
das Schaltergehäuse (1) stirnseitig mit Verbindungsflanschen (13,14) zum Anschluss von weiteren Kapselungsbausteinen (4,5) versehen ist, wobei
als weitere Kapselungsbausteine wenigstens zwei Bausteine (4) zur Umlenkung der Stromanschlüsse der Unterbrechereinheiten (26,27) in die abzweigenden Leitungsanschlüsse (42,43,45) angeordnet sind,
**dadurch gekennzeichnet,**
**dass** das Schaltergehäuse (1,17) auf einem Traggestell (2) angeordnet und dem Schaltergehäuse (1) eine Antriebseinrichtung (3,35) zum Antrieb der bewegbaren Teile (74) der Unterbrechereinheiten zugeordnet ist und
**dass** die Antriebseinrichtung (3,35) zum Zwecke der Einleitung der Antriebskräfte in das Schaltergehäuse (1,17) über ein im Mantelbereich des Schaltergehäuses (1,17) angeordnetes Drehlager (81) seitlich zum Schaltergehäuse (1,17) angeordnet ist.

2. Freiluft-Hochspannungsschalteinrichtung nach Anspruch 1,
**dadurch gekennzeichnet,**
**dass** das Schaltergehäuse (1,17) asymmetrisch quergeteilt (11,12) ist, wobei die Außendurchmesser (d) der Anschlussflansche kleiner als der Außendurchmesser (D) des Schaltergehäuses sind.

3. Freiluft-Hochspannungsschalteinrichtung nach Anspruch 2,
**dadurch gekennzeichnet,**
**dass** das axial kürzere Teil (12) des Schaltergehäuses (1) als Stromwandlerbaustein ausgebildet ist.

4. Freiluft-Hochspannungsschalteinrichtung nach Anspruch 1,
**dadurch gekennzeichnet,**
**dass** das Schaltergehäuse (1) derart quergeteilt ist, dass zwei axial kürzere Teile (15,16) beidendig einem axial längeren (17) Teil zugeordnet sind,
wobei der Außendurchmesser (d) der Verbindungsflansche zum Anschluß weiterer Kapselungsbausteine kleiner als der Außendurchmesser (D) des Schaltergehäuses (1) ist,
und **daß** wenigstens eines der axial kürzeren Teile (15,16) des Schaltergehäuses (1) als Stromwandlerbaustein ausgebildet ist.

5. Freiluft-Hochspannungsschalteinrichtung nach einem der Ansprüche 1 bis 4,
**dadurch gekennzeichnet,**
**dass** die Antriebseinrichtung (35,19) an einem Montageflansch (18) im Mantelbereich des Schaltergehäuses (17) befestigt und über getrennte Hebelgetriebe für die einzelnen Unterbrechereinheiten an deren bewegbare Kontaktstücke (74) angekoppelt ist,
wobei das Drehlager (81) in einem an den Montageflansch angeschlossenen Getriebegehäuse (19) angeordnet ist und jedes Hebelgetriebe einen zweiarmigen Umlenkhebel (71) aufweist, denen Drehlager (82) am Mantel des Schaltergehäuses isoliert (28) abgestützt (26,77) ist.

6. Freiluft-Hochspannungsschalteinrichtung nach einem der Ansprüche 1 bis 5,
**dadurch gekennzeichnet,**
**dass** wenigstens einer der Umlenk-Bausteine als Trenner-Erder-Baustein (60,61) ausgebildet ist.

7. Freiluft-Hochspannungsschalteinrichtung nach einem der Ansprüche 1 bis 6,
**dadurch gekennzeichnet,**
**dass** an wenigstens einen der beiden Umlenk-Bausteine (60) ein dreipoliger Kabelanschluss-Baustein (46) angeschlossen ist.

8. Freiluft-Hochspannungsschalteinrichtung nach Anspruch 7 mit einem einen Kabelanschluss-Baustein tragenden Umlenk-Baustein,
**dadurch gekennzeichnet,**
**dass** an den zweiten Umlenk-Baustein (47) ein rohrförmiger Kapselungs-Baustein (7) einer horizontal verlaufenden dreiphasigen Sammelschiene angeschlossen ist.

9. Freiluft-Hochspannungsschalteinrichtung nach einem der Ansprüche 1 bis 6,
**dadurch gekennzeichnet,**
**dass** wenigstens einer der beiden Umlenk-Bausteine als Aufteilungs-Baustein (4) mit nach oben gespreizt abzweigenden Anschlüssen für Freiluftdurchführungen (45) ausgebildet ist.

10. Freiluft-Hochspannungsschalteinrichtung nach Anspruch 9 mit einem ersten, als Aufteilungs-Baustein ausgebildeten Umlenk-Baustein,
**dadurch gekennzeichnet,**
**dass** auf den zweiten Umlenkbaustein (60) ein Aufteilungsbaustein (49) mit nach oben gespreizt abzweigenden Anschlüssen für Freiluftdurchführungen (45) aufgesetzt ist.

11. Freiluft-Hochspannungsschalteinrichtung nach Anspruch 9 mit einem ersten, als Aufteilungs-Baustein (4) ausgebildeten Umlenk-Baustein,
**dadurch gekennzeichnet,**
**dass** an den zweiten Umlenk-Baustein (47) ein rohrförmiger Kapselungsbaustein (7) einer horizontal verlaufenden dreiphasigen Sammelschiene angeschlossen ist.

12. Freiluft-Hochspannungsschalteinrichtung nach einem der Ansprüche 9 bis 11,
**dadurch gekennzeichnet,**
**dass** die Anschlüsse für die Freiluftdurchführungen (42,43,44) in einer gemeinsamen vertikalen Ebene liegen.

13. Freiluft-Hochspannungsschalteinrichtung nach Anspruch 12,
**dadurch gekennzeichnet,**
**dass** jeder als Aufteilungsbaustein (4) ausgebildete Umlenk-Baustein als kurzer Hohlzylinder (41) ausgebildet ist, von dem ein sich trichterförmig erweiternder Gehäusebereich (42) radial abzweigt und in mehrere Anschlussflansche (43) übergeht, wobei die Anschlussebene dieser Anschlussflansche tangential an einem konzentrisch zur Achse des Aufteilungsbausteines verlaufenden Teilkreis (44) anliegen.

14. Freiluft-Hochspannungsschalteinrichtung nach einem der Ansprüche 1 bis 6,
**dadurch gekennzeichnet,**
**dass** an den einen Umlenk-Baustein (47) ein rohrförmiger Kapselungsbausteine einer horizontal verlaufenden dreiphasigen Sammelschiene angeschlossen ist
und **daß** an den anderen, vertikal ausgerichteten Umlenk-Baustein (48) nach oben anschließend ein weiterer, gleichartiger Umlenk-Baustein (48) zur Ankopplung einer parallel zur ersten Sammelschiene verlaufenden zweiten Sammelschiene angeschlossen ist.

15. Freiluft-Hochspannungsschalteinrichtung nach einem der Ansprüche 1 bis 14,
**dadurch gekennzeichnet,**
**dass** an einem der beiden Umlenkbausteine (60, 61) - gegebenenfalls zusätzlich - ein Spannungswandler-Baustein (6) angeschlossen ist.

16. Freiluft-Hochspannungsschalteinrichtung nach einem der Ansprüche 1 bis 5,
**dadurch gekennzeichnet,**
**dass** zwischen einem Verbindungsflansch (13) des Schaltergehäuses (1) und einem Umlenkbaustein (4) ein Kapselungsbaustein (5) zur Aufnahme von Trennschaltern bzw. von kombinierten Trenn-Erdungsschaltern angeordnet ist.

17. Freiluft-Hochspannungsschalteinrichtung nach Anspruch 16,
**dadurch gekennzeichnet,**
**dass** an den Trenner-Baustein bzw. den Trenner-Erder-Baustein (5) ein Spannungswandler-Baustein (6) angeschlossen ist.

18. Freiluft-Hochspannungsschalteinrichtung nach Anspruch 6 mit zwei als Trenner-Erder-Bausteine (60,61) ausgebildeten, vertikal ausgerichteten Umlenkbausteinen,
**dadurch gekennzeichnet,**
**daß** auf jeden Umlenk-Baustein (60, 61) ein Aufteilungsbaustein (54) mit nach oben gespreizt abzweigenden Anschlüssen für Freiluftdurchführungen (45) aufgesetzt ist,
wobei die Freiluftanschlüsse (55) des jeweiligen Austeilungs-Bausteines in einer gemeinsamen, gegen die Vertikale geneigten Ebene liegen.

19. Freiluft-Hochspannungsschalteinrichtung nach Anspruch 9 mit zwei als Aufteilungs-Bausteine ausgebildeten, mit nach oben gespreizt abzweigenden Anschlüssen für Freiluftdurchführungen versehenen Umlenk-Bausteinen (31,33),
**dadurch gekennzeichnet,**
**dass** zwischen einem Verbindungsflansch (13, 14) des Schaltergehäuses (25) und einem der beiden Umlenk-Bausteine (31, 33) weitere Kapselungsbausteine angeordnet sind, von denen wenigstens einer (60,61) zur Umlenkung der Strombahn in einer horizontalen Ebene um 90° dient.

20. Freiluft-Hochspannungsschalteinrichtung nach Anspruch 19,
**dadurch gekennzeichnet,**
**dass** es sich bei den weiteren Kapselungsbausteinen im wesentlichen um Trenner-Erder-Bausteine (60,61,62,63,50,51) und um Leistungsschalter-Bausteine (21,22,23,24) handelt, die zur Realisierung einer sogenannten H-Schaltung dienen.

21. Freiluft-Hochspannungsschalteinrichtung nach Anspruch 20,
**dadurch gekennzeichnet,**
**dass** beiderseits eines Leistungsschalters (25) jeweils ein erster und ein zweiter Trenner-Erder-Baustein (5, 60; 5, 61) angeordnet sind, wobei an den ersten Trenner-Erder-Baustein (5) ein Kabelanschluss-Baustein und an den zweiten Trenner-Erder-Baustein (60, 61) ein weiterer Leistungsschalter (25) mit einem als Aufteilungsbaustein (4) für nach oben gespreizt abzweigende Freiluftdurchführungen (45) ausgebildeter Umlenk-Baustein angeschlossen ist.

22. Freiluft-Hochspannungsschalteinrichtung nach Anspruch 19 mit einem als Trenner-Erder-Baustein ausgebildeten 90°-Umlenk-Baustein,
**dadurch gekennzeichnet,**
**dass** an den über den horizontalen 90°-Umlenk-Baustein angeschlossenen Aufteilungsbaustein weitere Kapselungsbausteine angeschlossen sind, von denen wenigstens einer ein als Trenner-Erder-Baustein ausgebildeter horizontaler 90°-Umlenk-Baustein und wenigstens ein weiterer ein Aufteilungsbaustein ist.

23. Freiluft-Hochspannungsschalteinrichtung nach Anspruch 19,
**dadurch gekennzeichnet,**
**dass** als weitere Kapselungsbausteine drei übereck im rechten Winkel zueinander angeordnete Trenner-Erder-Bausteine (50,60,62) vorgesehen sind, von denen der mittlere (60) über einen zusätzlichen Leistungsschalter-Baustein (22) mit einer zweiten, gleichartig aufgebauten und spiegelbildlich angeordneten Freiluft-Hochspannungsschalteinrichtung (21,32,33,51,-61,63) verbunden ist.

## Claims

1. Polyphase encapsulated, gas-insulated outdoor high-voltage switching device with a flat or horizontal construction,
in which a number of circuit breaker interrupter units (26, 27) are arranged parallel to one another in a tubular switch enclosure (1, 3, 17),
in which, at both ends, these interrupter units (26, 27) have associated cable connections which branch off at an angle to the longitudinal axis of the switch enclosure, and the switch enclosure (1) is provided at the ends with connecting flanges (13, 14) for connection of further encapsulation modules (4, 5), in which case
at least two modules (4) are arranged as further encapsulation modules in order to change the direction of the electrical connections of the interrupter units (26, 27) into the branching line connections (42, 43, 45),
**characterized**
**in that** the switch enclosure (1, 17) is arranged on a mounting frame (2) and the switch enclosure (1) has an associated drive device (3, 35) for driving the moveable parts (74) of the interrupter units, and that the drive device (3, 35) is arranged to the side of the switch enclosure (1, 17), via a rotary bearing (81) which is arranged in the casing region of the switch enclosure (1, 17), in order to introduce the drive forces into the switch enclosure (1, 17).

2. Outdoor high-voltage switching device according to Claim 1,
**characterized**
**in that** the switch enclosure (1, 17) is split asymmetrically transversely (11, 12), with the external diameters (d) of the connecting flanges being less than the external diameter (D) of the switch enclosure.

3. Outdoor high-voltage switching device according to Claim 2,
**characterized**
**in that** the axially shorter part (12) of the switch enclosure (1) is in the form of a current transformer module.

4. Outdoor high-voltage switching device according to Claim 1,
**characterized**
**in that** the switch enclosure (1) is split transversely in such a manner that two axially shorter parts (15, 16) are associated at both ends with an axially longer (17) part,
in which the external diameter (d) of the connecting flanges for connection of further encapsulation modules is less than the external diameter (D) of the switch enclosure (1),
and **in that** at least one of the axially shorter parts (15, 16) of the switch enclosure (1) is in the form of a current transformer module.

5. Outdoor high-voltage switching device according to one of Claims 1 to 4, **characterized**
**in that** the drive device (35, 19) is mounted on a mounting flange (18) in the casing region of the switch enclosure (17) and is coupled via separate lever drives for the individual interrupter units to their moveable contact pieces (74),
in which case the rotary bearing (81) is arranged in a drive enclosure (19) which is connected to the mounting flange, and each lever drive having a two-armed direction-changing lever (71) whose rotary bearing (82) is supported (26, 77) in an insulating manner (28) at the casing of the switch enclosure.

6. Outdoor high-voltage switching device according to one of Claims 1 to 5, **characterized**
**in that** at least one of the direction-changing modules is in the form of a disconnector-grounding device module (60, 61).

7. Outdoor high-voltage switching device according to one of Claims 1 to 6, **characterized**
**in that** a three-pole cable connection module (46) is connected with at least one of the two direction-changing modules (60).

8. Outdoor high-voltage switching device according to Claim 7 having a direction-changing module to which a cable connection module is fit, **characterized**
**in that** a tubular encapsulation module (7) of a horizontally running three-phase busbar is connected to the second direction-changing module (47).

9. Outdoor high-voltage switching device according to one of Claims 1 to 6, **characterized**
**in that** at least one of the two direction-changing modules is in the form of a splitting module (4) with connections, which branch off upwards in a spread manner, for outdoor bushings (45).

10. Outdoor high-voltage switching device according to Claim 9 having a first direction-changing module which is in the form of a splitting module, **characterized**
**in that** a splitting module (49) having connections, which branch off upwards in a spread manner, for outdoor bushings (45) are fit to the second direction-changing module (60).

11. Outdoor high-voltage switching device according to Claim 9 having a first direction-changing module which is in the form of a splitting module (4),
**characterized**
**in that** a tubular encapsulation module (7) of a horizontally running three-phase busbar is connected to the second direction-changing module (47).

12. Outdoor high-voltage switching device according to one of Claims 9 to 11, **characterized**
**in that** the connections for the outdoor bushings (42, 43, 44) lie in a common vertical plane.

13. Outdoor high-voltage switching device according to Claim 12, **characterized**
**in that** each direction-changing module, which is in the form of a splitting module (4), is in the form of a short hollow cylinder (41) from which an enclosure region (42), which widens like a funnel, branches off radially and merges into a number of connecting flanges (43), with the connection plane of these connecting flanges lying tangentially against a part of a circle (44) which runs concentrically with respect to the axis of the splitting module.

14. Outdoor high-voltage switching device according to one of Claims 1 to 6, **characterized**
**in that** a tubular encapsulation module of a horizontally running three-phase busbar is connected to the one direction-changing module (47), and in that a further, identical direction-changing module (48) is connected to the other, vertically aligned direction-changing module (48), adjacent to it upwards, for coupling a second busbar which runs parallel to the first busbar.

15. Outdoor high-voltage switching device according to one of Claims 1 to 14, **characterized**
**in that** a voltage transformer module (6) is - possibly additionally - connected to one of the two direction-changing modules (60, 61).

16. Outdoor high-voltage switching device according to one of Claims 1 to 5, **characterized**
**in that** an encapsulation module (5) is arranged between a connection flange (13) of the switch enclosure (1) and a direction-changing module (4), in order to accommodate switch disconnectors and/or combined switch disconnector/grounding switches.

17. Outdoor high-voltage switching device according to Claim 16, **characterized**
**in that** a voltage transformer module (6) is connected to the disconnector module or to the disconnector-grounding device module (5).

18. Outdoor high-voltage switching device according to Claim 6 having two direction-changing modules (60, 61) which are in the form of disconnector-grounding device modules and are aligned vertically, **characterized**
**in that** a splitting module (54) with connections, which branch off upwards in a spread manner, for outdoor bushings (45) are fit to each direction-changing module (60, 61),
in which case the outdoor connections (55) of the respective splitting module lie in a common plane which is inclined to the vertical.

19. Outdoor high-voltage switching device according to Claim 9 having two direction-changing modules (31, 33) which are provided connections, which are in the form of splitting modules and branch off upwards in a spread manner, for outdoor bushings,
**characterized**
**in that** further encapsulation modules are arranged between a connection flange (13, 14) of the switch enclosure (25) and one of the two direction-changing modules (31, 33), at least one (60, 61) of which further encapsulation modules is used to change the direction of the current path through 90° in a horizontal plane.

20. Outdoor high-voltage switching device according to Claim 19, **characterized**
**in that** the further encapsulation modules are essentially disconnector-grounding device modules (60, 61, 62, 63, 50, 51) and circuit breaker modules (21, 22, 23, 24), which are used to produce what is referred to as an H-circuit.

21. Outdoor high-voltage switching device according to Claim 20, **characterized**
**in that** a first and second disconnector-grounding device module (5, 60; 5, 61) are respectively arranged on both sides of a circuit breaker (25), in which case a cable connection module is connected to the first disconnector-grounding device module (5) and a further circuit breaker (25) is connected to the second disconnector-grounding device module (60, 61), having a direction-changing module which is in the form of a splitting module (4) for outdoor bushings (45) which branch off upwards in a spread manner.

22. Outdoor high-voltage switching device according to Claim 19 having a 90° direction-changing module which is in the form of a disconnector-grounding device module, **characterized**
**in that** further encapsulation modules are connected to the splitting module which is connected via the horizontal 90° direction-changing module, at least one of which encapsulation modules is a horizontal 90° direction-changing module in the form of a disconnector-grounding device module, and at least one other encapsulation module is a splitting module.

23. Outdoor high-voltage switching device according to Claim 19, **characterized**
**in that** three disconnector-grounding device modules (50, 60, 62), which are arranged diagonally opposite at right angles to one another, are provided as further encapsulation modules, of which the central module (60) is connected via an additional circuit breaker module (22) to a second outdoor high-voltage switching device (21, 32, 33, 51, 61, 63) which has an identical construction and is arranged in mirror-image form.

## Revendications

1. Dispositif disjoncteur de haute tension, encapsulé et isolé par du gaz pour courant polyphasé pour montage à l'extérieur en mode de construction à plat ou horizontal,
dans lequel plusieurs unités ( 26, 27 ) de coupure de disjoncteur sont disposées parallèlement les unes aux autres dans un boîtier ( 1, 3, 17 ) tubulaire de disjoncteur,
dans lequel à ces unités ( 26, 27 ) de coupure sont associées des bornes de ligne bifurquant aux deux extrémités en faisant un angle avec l'axe longitudinal du boîtier de disjoncteur et
le boîtier ( 1 ) de disjoncteur est muni du côté frontal de brides ( 13, 14 ) de liaison de raccordement à d'autres modules ( 4, 5 ) d'encapsulation, dans lequel
comme autres modules d'encapsulation, il est disposé deux modules ( 4 ) de renvoi des bornes de courant des unités ( 26, 27 ) de coupure aux bornes ( 42, 43, 45 ) de ligne qui bifurquent,
**caractérisé**
**en ce que** le boîtier ( 1, 17 ) de disjoncteur est disposé sur un châssis ( 2 ) porteur et au boîtier ( 1 ) de disjoncteur est associé un dispositif ( 3, 35 ) d'entraînement des parties ( 74 ) mobiles des unités de coupure et
**en ce que** le dispositif ( 3, 35 ) d'entraînement est, afin d'appliquer les forces d'entraînement au boîtier ( 1, 17 ) du disjoncteur, disposé latéralement au boîtier ( 1, 17 ) du disjoncteur par un coussinet ( 81 ) de pivotement disposé dans la partie de surface latérale du boîtier ( 1, 17 ) du disjoncteur.

2. Dispositif disjoncteur de haute tension pour montage à l'extérieur suivant la revendication 1,
**caractérisé**
**en ce que** le boîtier ( 1, 17 ) du disjoncteur est subdivisé ( 11, 12 ) transversalement d'une manière dissymétrique, le diamètre ( d ) extérieur des deux brides de raccordement étant plus petit que le diamètre ( D ) extérieur du boîtier de disjoncteur.

3. Dispositif disjoncteur de haute tension pour montage à l'extérieur suivant la revendication 2,
**caractérisé**
**en ce que** la partie ( 12 ) d'actionnement la plus courte du boîtier ( 1 ) du disjoncteur est constituée en module de convertisseur de courant.

4. Dispositif disjoncteur de haute tension pour montage à l'extérieur suivant la revendication 1,
**caractérisé**
**en ce que** le boîtier ( 1 ) du disjoncteur est subdivisé transversalement de façon à ce que deux parties ( 15, 16 ) axialement les plus courtes soient associées aux deux extrémités à une partie axialement plus longue ( 17 ),
dans lequel le diamètre ( d ) extérieur des brides de raccordement pour le raccordement d'autres modules d'encapsulation est plus petit que le diamètre ( D ) extérieur du boîtier ( 1 ) du disjoncteur
et **en ce que** au moins l'une des parties ( 15, 16 ) axialement les plus courtes du boîtier ( 1 ) du disjoncteur est constituée en module de convertisseur de courant.

5. Dispositif disjoncteur de haute tension pour montage à l'extérieur suivant l'une des revendications 1 à 4,
**caractérisé**
**en ce que** le dispositif ( 35, 19 ) d'entraînement est fixé sur une bride ( 18 ) de montage dans la partie de surface latérale du boîtier ( 17 ) du disjoncteur et est couplé à des pièces ( 74 ) de contact mobiles des unités de coupure par des mécanismes à levier distincts pour les diverses unités de coupure,
dans lequel le coussinet ( 81 ) de pivotement est disposé dans un boîtier ( 19 ) de transmission raccordé à la bride de montage et chaque transmission à levier a un levier ( 71 ) de renvoi à deux bras, dont le coussinet ( 82 ) de pivotement s'appuie ( 26, 27 ) de manière isolée ( 28 ) à la surface latérale du boîtier du disjoncteur.

6. Dispositif disjoncteur de haute tension pour montage à l'extérieur suivant l'une des revendications 1 à 5,
**caractérisé**
**en ce que** au moins l'un des modules de renvoi est constitué en module ( 60, 61 ) sectionneur-de mise à la terre.

7. Dispositif disjoncteur de haute tension pour montage à l'extérieur suivant l'une des revendications 1 à 6,
**caractérisé**
**en ce qu'**un module ( 46 ) de connexion de câble bipolaire est raccordé à au moins l'un des deux modules ( 60 ) de renvoi.

8. Dispositif disjoncteur de haute tension pour montage à l'extérieur suivant la revendication 7 comprenant un module de renvoi portant un module de connexion de câble,
**caractérisé**
**en ce qu'**un module ( 7 ) d'encapsulation tubulaire d'un rail collecteur triphasé s'étendant horizontalement est raccordé aux deux modules ( 47 ) de renvoi.

9. Dispositif disjoncteur de haute tension pour montage à l'extérieur suivant l'une des revendications 1 à 6,
**caractérisé**
**en ce qu'**au moins l'un des deux modules de renvoi est constitué sous la forme d'un module ( 4 ) de répartition ayant des bornes pour des traversées ( 45 ) à l'extérieur bifurquant en s'écartant vers le haut.

10. Dispositif disjoncteur de haute tension pour montage à l'extérieur suivant la revendication 9, comprenant un premier module de renvoi constitué en module de répartition,
**caractérisé**
**en ce que** sur le deuxième module ( 60 ) de renvoi est posé un module ( 49 ) de répartition ayant des bornes bifurquant en s'écartant vers le haut pour des traversées ( 45 ) de montage à l'extérieur.

11. Dispositif disjoncteur de haute tension pour montage à l'extérieur suivant la revendication 9, comprenant un premier module de renvoi constitué en module ( 4 ) de répartition,
**caractérisé**
**en ce qu'**un module ( 7 ) d'encapsulation tubulaire d'un rail collecteur triphasé s'étendant horizontalement est raccordé au deuxième module ( 47 ) de renvoi.

12. Dispositif disjoncteur de haute tension pour montage à l'extérieur suivant l'une des revendications 9 à 11,
**caractérisé**
**en ce que** les bornes pour les traversées ( 42, 43, 44 ) de montage à l'extérieur sont disposées dans un plan vertical commun.

13. Dispositif disjoncteur de haute tension pour montage à l'extérieur suivant la revendication 12,
**caractérisé**
**en ce que** chaque module de renvoi constitué sous la forme d'un module ( 4 ) de répartition est constitué sous la forme d'un cylindre ( 41 ) creux assez court, duquel bifurque radialement une partie ( 42 ) de boîtier s'élargissant en trémie et se transformant en plusieurs brides ( 43 ) de connexion, le plan de raccordement de ces brides de raccordement étant tangent à une partie ( 44 ) de cercle s'étendant concentriquement à l'axe du module de répartition.

14. Dispositif disjoncteur de haute tension pour montage à l'extérieur suivant l'une des revendications 1 à 6,
**caractérisé**
**en ce qu'**un module d'encapsulation tubulaire d'un rail collecteur triphasé s'étendant horizontalement est raccordé au un module ( 47 ) de renvoi
et **en ce qu'**à l'autre module ( 48 ) de renvoi dirigé verticalement se raccorde vers le haut, ensuite, un autre module ( 48 ) de renvoi de même type pour le couplage d'un deuxième rail collecteur s'étendant parallèlement au premier rail collecteur.

15. Dispositif disjoncteur de haute tension pour montage à l'extérieur suivant l'une des revendications 1 à 14,
**caractérisé**
**en ce qu'**un module ( 6 ) de convertisseur de tension est raccordé, le cas échéant, supplémentairement à l'un des deux modules ( 60, 61 ) de renvoi.

16. Dispositif disjoncteur de haute tension pour montage à l'extérieur suivant l'une des revendications 1 à 5,
**caractérisé**
**en ce qu'**entre une bride ( 13 ) de liaison du boîtier ( 1 ) du disjoncteur et un module ( 4 ) de renvoi est monté un module ( 5 ) d'encapsulage pour la réception de sectionneurs ou de sectionneurs-et mises à la terre combinés.

17. Dispositif disjoncteur de haute tension pour montage à l'extérieur suivant la revendication 16,
**caractérisé**
**en ce qu'**un module ( 6 ) convertisseur de tension est raccordé au module de sectionneur ou au module de sectionneur-mise à la terre.

18. Dispositif disjoncteur de haute tension pour montage à l'extérieur suivant la revendication 6, ayant deux modules de renvoi dirigés verticalement et constitués sous la forme de modules ( 60, 61 ) sectionneurs-de mise à la terre,
**caractérisé**
**en ce que** sur chaque module ( 60, 61 ) de renvoi est posé un module ( 54 ) de répartition ayant des bornes bifurquant en s'écartant vers le haut pour des traversées ( 45 ) de montage à l'extérieur,
les bornes ( 55 ) de montage à l'extérieur de chaque module de répartition se trouvant dans un plan commun incliné par rapport à la verticale.

19. Dispositif disjoncteur de haute tension pour montage à l'extérieur suivant la revendication 9, ayant deux modules ( 31, 33 ) de renvoi constitués sous la forme de modules de répartition et munis de bornes bifurquant en s'écartant vers le haut pour des traversées de montage à l'extérieur,
**caractérisé**
**en ce qu'**entre une bride ( 13, 14 ) de raccordement du boîtier ( 25 ) du disjoncteur et l'un des deux modules ( 31, 33 ) de renvoi sont disposés d'autres modules d'encapsulage, dont l'un ( 60, 61 ) au moins sert à renvoyer de 90° la voie de courant dans un plan horizontal.

20. Dispositif disjoncteur de haute tension pour montage à l'extérieur suivant la revendication 19, dans lequel les autres modules d'encapsulage sont essentiellement des modules ( 60, 61, 62, 63, 50, 51 ) de sectionneur-mise à la terre et des modules ( 21, 22, 23, 24 ) de disjoncteur qui servent à la réalisation de ce que l'on appelle un circuit en H.

21. Dispositif disjoncteur de haute tension pour montage à l'extérieur suivant la revendication 20,
**caractérisé**
**en ce que** des deux côtés d'un disjoncteur ( 25 ) sont disposés, respectivement, un premier et un deuxième module ( 5, 60 ; 5, 61 ) de sectionneur-mise à la terre, dans lequel, sur le premier module ( 5 ) de sectionneur-mise à la terre est raccordé un module de raccordement de câble et sur le deuxième module ( 60, 61 ) de sectionneur-mise à la terre est raccordé un autre disjoncteur ( 25 ) ayant un module de renvoi constitué sous la forme d'un module ( 4 ) de répartition pour des traversées ( 45 ) de montage à l'extérieur bifurquant en s'écartant vers le haut.

22. Dispositif disjoncteur de haute tension pour montage à l'extérieur suivant la revendication 19, comprenant un module de renvoi à 90° constitué sous la forme d'un module de sectionneur-mise à la terre,
**caractérisé**
**en ce qu'**au module de répartition raccordé par le module horizontal de renvoi à 90° sont raccordés d'autres modules d'encapsulage, dont l'un au moins est un module horizontal de renvoi à 90° constitué sous la forme d'un module de sectionneur-mise à la terre et dont au moins un autre est un module de répartition.

23. Dispositif disjoncteur de haute tension pour montage à l'extérieur suivant la revendication 19,
**caractérisé**
**en ce qu'**il est prévu comme autre module d'encapsulage trois modules ( 50, 60, 62 ) de sectionneur-mise à la terre disposés en diagonale à angle droit les uns par rapport aux autres, dont le médian ( 60 ) est relié par un module ( 22 ) de disjoncteur supplémentaire à un deuxième dispositif ( 21, 32, 33, 51, 61, 63 ) de disjoncteur de haute tension pour montage à l'extérieur constitué de la même façon et disposé de façon symétrique comme en un miroir.
